# EUROPÄISCHE PATENTSCHRIFT

(11) **EP 3 827 026 B1**
(45) Veröffentlichungstag und Bekanntmachung des Hinweises auf die Patenterteilung: **03.08.2022**
(21) Anmeldenummer: 19740531.9
(22) Anmeldetag: 12.07.2019
(51) Int. Cl.: C08B 15/08

(54) **VERFAHREN ZUM ISOLIEREN VON CELLULOSE- ODER CHITINNANOKRISTALLEN DURCH PERIODATOXIDATION**
METHODS FOR THE ISOLATION OF CELLULOSE OR CHITIN NANOCRYSTALS BY PEROXIDE OXIDATION
PROCEDES D'ISOLEMENT DE NANOCRISTAUX DE CELLULOSE OU DE CHITINE PAR OXYDATION DE PEROXYDE

(30) Priorität: 23.07.2018 DE 102018117741
(43) Veröffentlichungstag der Anmeldung: 02.06.2021
(73) Patentinhaber: Georg-August-Universität Göttingen, 37073 Göttingen (DE)
(72) Erfinder: ZHANG, Kai, 37120 Bovenden (DE); LIU, Peiwen, Wuhan 4300070 (CN)
(74) Vertreter: REHBERG HÜPPE + PARTNER
(86) Internationale Anmeldenummer: PCT/EP2019/068787
(87) Internationale Veröffentlichungsnummer: WO 2020/020661

(56) Entgegenhaltungen:
- WO-A1-2017/202878
- SUN BO ET AL: "Sodium periodate oxidation of cellulose nanocrystal and its application as a paper wet strength additive", CELLULOSE, SPRINGER NETHERLANDS, NETHERLANDS, Bd. 22, Nr. 2, 17. Februar 2015 (2015-02-17), Seiten 1135-1146, XP035463033, ISSN: 0969-0239, DOI: 10.1007/S10570-015-0575-5 [gefunden am 2015-02-17]
- Docteur De ET AL: "THÈSE Pour obtenir le grade de Présentée par Monsieur Naceur BELGACEM Monsieur Wim THIELEMANS", , 30. März 2018 (2018-03-30), XP55630699, Gefunden im Internet: URL:https://tel.archives-ouvertes.fr/tel-0 1852166/file/LEGUY_2018_archivage.pdf [gefunden am 2019-10-10]
- THEO G. M. VAN DE VEN ET AL: "Hairy cellulose nanocrystalloids: a novel class of nanocellulose", NANOSCALE, Bd. 8, Nr. 33, 1. Januar 2016 (2016-01-01) , Seiten 15101-15114, XP55630710, United Kingdom ISSN: 2040-3364, DOI: 10.1039/C6NR01570K
- Charhouf: "Characterization of a Dialdehyde Chitosan Generated by Periodate Oxidation", , 1. Januar 2014 (2014-01-01), Seiten 336-348, XP55630715, Gefunden im Internet: URL:https://pdfs.semanticscholar.org/1d09/ 66600ac5c21a5c0f290cc21d3c9861e31e21.pdf [gefunden am 2019-10-10]

## Beschreibung

### TECHNISCHES GEBIET DER ERFINDUNG

Die Erfindung bezieht sich auf ein Verfahren zum Isolieren von Nanokristallen aus einem Lignocellulose- oder Chitin-haltigen Ausgangsmaterial durch Periodatoxidation, bei dem das Ausgangsmaterial in einer wässrigen Suspension einer oxidativen Wirkung von Periodatanionen ausgesetzt wird. Bei den isolierten Nanokristallen handelt es sich je nach Ausgangsmaterial um Cellulose- oder Chitinnanokristalle.

Cellulosenanokristalle werden aufgrund ihrer englischen Bezeichnung Cellulose Nano Crystals auch als CNC bezeichnet. CNC weisen eine hohe Kristallinität auf. Ihr typischer Durchmesser beträgt weniger als 100 nm, ihre Länge weniger als 500 nm.

CNC weisen ein großes Potential bei der Herstellung von erneuerbaren und biologisch abbaubaren Materialien auf verschiedenen technischen Gebieten auf.

Eine spezielle Verwendung von CNC ist diejenige bei der Ausbildung von sogenannten High Internal Phase Pickering Emulsionen (HIPE) bei denen die CNC an den Grenzflächen der verschiedenen Bestandteile der Emulsion anlagern und die Emulsion, zum Beispiel eine Öl-in-Wasser Emulsion, stabilisieren.

CNC sind in verschiedenen Lignocellulose-haltigen Ausgangsmaterialien enthalten. Hierzu zählen u. a. Holz, Stroh und andere, insbesondere faserhaltige, Biomassen. In diesen Lignocellulose-haltigen Ausgangsmaterialien sind die CNC regelmäßig nicht frei vorhanden, sondern bilden Bestandteile von Lignocellulose-Fasern, in denen sie durch amorphe Cellulose zu zusammenhängenden Strukturen verbunden sind.

Chitin ist neben Cellulose das am weitesten verbreitete Polysaccharid und dient der Strukturbildung. Es unterscheidet sich von Cellulose durch eine Acetamidgruppe. Chitin ist in verschiedenen biologischen Ausgangsmaterialien enthalten, die auf Pilzen oder verschiedenen Tieren basieren. Hohe Konzentrationen von Chitin weisen Schalen von Schalen- und Krustentieren auf, in denen Chitinnanokristalle in durch amorphes Chitin gebundenen Strukturen enthalten sind.

Chitinnanokristalle (ChNC) weisen ähnliche Abmessungen wie CNC auf und weisen ebenfalls eine hohe Kristallinität und ein großes Potential bei der Herstellung von erneuerbaren und biologisch abbaubaren Materialien auf verschiedenen technischen Gebieten auf.

### STAND DER TECHNIK

Aus Yu Wu et al. "Carboxyl CNCs from Poplar", BioResources 12 (4), 8775-8785 (2017) ist ein Verfahren bekannt, bei dem Ammoniumpersulfatoxidation eingesetzt wird, um CNC aus Lignocellulose-haltigem Ausgangsmaterial zu isolieren, das von Hybridpappeln gewonnen wurde. Die isolierten CNC werden zusätzlich mit Natriumperiodat behandelt, um selektiv HydroxylGruppen an der C2-/C3-Position der Cellulose in Carboxylgruppen zu oxidieren.

Aus H. Yang et al. "Preparation and characterization of sterically stabilized nanocrystalline cellulose obtained by periodate oxidation of cellulose fibers", Cellulose 22:1743-1752 (2015) ist die Produktion von CNC durch Periodatoxidation von Lignocellulose-haltigen Ausgangsmaterialien bekannt. Hierzu werden einem feuchten Faserbrei NalO₄ und NaCl zugesetzt, und die Reaktion erfolgt im Dunklen unter Rühren für vier Tage, bis sie durch Zugabe von Ethylenglykol zum Quenchen des Restperiodats beendet wird. Anschließend werden die CNC mit heißem Wasser behandelt und dann aus der wässrigen Lösung abgetrennt.

H. Xie et al. "Recent Strategies in Preparation of Cellulose Nanocrystals and Cellulose Nanofibrils Derived from Raw Cellulose Materials", Hindawi International Journal of Polymer Science, Volume 2018, Article ID 7923068, geben eine Übersicht über verschiedene Verfahren zum Isolieren von CNC, u. a. unter Verwendung von Natriumperiodat als Oxidationsmittel gefolgt von Natriumchlorid als weiterem Oxidationsmittel.

Aus der CN 107236049 A ist ein Verfahren zum Isolieren von Cellulosenanokristallen bekannt, bei dem ein Celluloseausgangsmaterial für 4,5 bis 18 Stunden in einer Reaktionsflüssigkeit mit einem pH-Wert zwischen pH 9 und pH 11 gerührt wird. Die Reaktionsflüssigkeit ist eine Mischung von Nitroxid als Quelle für Stickstoffoxid-Radikale, Periodat, Natriumbromid und Natriumhypochlorit. Bei dem Nitroxid handelt es sich insbesondere um 2,2,6,6-Tetramethylpiperidin Oxinitrid (TEMPO). Das Periodat ist Kaliumperiodat, Natriumperiodat oder Bariumperiodat und wird in einer Menge von 1 bis 4 mol/kg Cellulose eingesetzt. Das Natriumhypochlorid kann durch Natriumchlorid ersetzt werden. Das Verhältnis von Stickstoffoxid-Radikalen und Periodat in der Reaktionsflüssigkeit liegt im Bereich von 1:2 bis 1:8.

Aus der CN 106758492 A ist ein Verfahren zur Herstellung von Cellulosenanokristallen bekannt, bei dem ein Celluloseausgangsmaterial in einer Reaktionsflüssigkeit mit einem pH-Wert im Bereich von pH 10 bis pH 11 für 4,5 bis 18 Stunden gerührt wird. Die Reaktionsflüssigkeit ist eine Mischung von TEMPO, Periodat, Natriumbromid und Natriumhypochlorid. TEMPO wird in einer Menge zwischen 0,25 und 1 mol/kg Cellulose eingesetzt. Das Periodat wird in einer Menge von 1 bis 4 mol/kg Cellulose eingesetzt. Das Verhältnis von TEMPO zu Periodat liegt zwischen 1:2 und 1:8.

Aus der CN 105330755 A ist ein Verfahren zur Herstellung von Polysaccharidnanofasern durch Persulfatoxidation bekannt.

Aus der WO 2015/070346 A1 ist ein Verfahren zur Herstellung von Chitinnanokristallen mittels Persulfatoxidation im stark sauren pH-Bereich von nicht mehr als pH 4 bekannt.

Aus der WO 2009/054512 A1 ist ein Verfahren zur Herstellung von Chitinnanofasern bekannt, bei dem in einem ersten Schritt kristallines Beta-Chitin in einer sauren Lösung mit einem pH-Wert von pH 5 oder weniger gereinigt und ein Aufschluss durch eine TEMPO-Oxidation erfolgt.

Fan et al.: "TEMPO-mediated oxidization of beta-chitin to prepare individual nanofibrils, Carbohydrate Polymers", 2009, 77(4): 832-838 offenbaren eine TEMPO-vermittelte oxidative Herstellung von Chitinnanokristallen in wässriger Lösung bei pH 10.

Die WO 2003/002612 A1 offenbart die Herstellung von Polymeren aus Polysachariden. Bei dem Polymer kann es sich um Chitosan, das heißt ein deacetyliertes Chitin, handeln. In einem ersten Schritt des bekannten Verfahrens wird ein Polysacharid mit einer wässrigen Lösung mit einem pH-Wert zwischen pH 6 und pH 8 behandelt. Das Oxidationsmittel kann Periodat sein.

Aus der JP 2009 068014 A ist ein Verfahren zum Herstellen von oxidiertem Chitin oder oxidiertem Chitosan bekannt. Dabei wird selektiv der Kohlenstoff an der sechsten Position eines Pyranoserings von N-Azetylglukosamin als Monosaccharidbestandteil von Chitin in eine Carboxygruppe und/oder ihr Salz oxidiert. Als Oxidationsmittel wird u. a. TEMPO zusammen mit Periodat in einem bevorzugten alkalischen pH-Wertebereich offenbart.

### AUFGABE DER ERFINDUNG

Der Erfindung liegt die Aufgabe zugrunde, ein möglichst einfaches und erfolgssicheres Verfahren zum Isolieren von Cellulose- und Chitinnanokristallen aufzuzeigen, das sich dennoch durch eine hohe Ausbeute auszeichnet.

### LÖSUNG

Erfindungsgemäß wird die Aufgabe durch ein Verfahren mit den Merkmalen des unabhängigen Patentanspruchs 1 gelöst. Bevorzugte Ausführungsbeispiele des erfindungsgemäßen Verfahrens sind in den abhängigen Patentansprüchen definiert.

### BESCHREIBUNG DER ERFINDUNG

Bei dem erfindungsgemäßen Verfahren zum Isolieren Nanokristallen aus einem Lignocellulose- oder Chitin-haltigen Ausgangsmaterial, wobei das Ausgangsmaterial in einer wässrigen Suspension einer oxidativen Wirkung von Periodat-Anionen ausgesetzt wird, wird der pH-Wert der wässrigen Suspension auf größer als pH 7,0 eingestellt. Die Periodatanionen werden in einer Menge von mindestens 5 mol je kg des Ausgangsmaterials bereitgestellt, und das Ausgangsmaterial wird der oxidativen Wirkung der Periodatanionen in der wässrigen Suspension für einen Zeitraum von mindestens einem Tag ausgesetzt.

Überraschenderweise zeigt sich, dass die durch die Periodat-Anionen bewirkte Periodatoxidation in dem alkalischen pH-Bereich oberhalb von pH 7,0 hochgradig selektiv amorphe Cellulose und amorphes Chitin abbaut, während kristalline Cellulose und kristallines Chitin und damit auch die interessierenden Cellulose- und Chitinnanokristalle nicht oder nur in unbedeutendem Maße abgebaut werden.

Bei den bekannten Verfahren zum Isolieren von Cellulose- oder Chitinnanokristallen aus einem Lignocellulose-haltigen oder Chitin-haltigen Ausgangsmaterial durch Periodatoxidation wirken die Periodat-Anionen nicht unter alkalischen wässrigen Bedingungen, sondern unter sauren wässrigen Bedingungen oder nicht als das entscheidende Oxidationsmittel, sondern in Kombination mit dem stärkeren Oxidationsmittel TEMPO auf das Ausgangsmaterial ein.

Unter sauren wässrigen Bedingungen ist jedoch keine Selektivität der Periodatoxidation für amorphe Cellulose und amorphes Chitin gegeben. Diese Selektivität ergibt sich aber überraschenderweise oberhalb von pH 7,0. Aufgrund der hohen Selektivität der Periodatoxidation bei diesen pH-Werten bedarf die Oxidation bei dem erfindungsgemäßen Verfahren keiner besonderen Überwachung. Insbesondere ist sie nicht auf ein besonderes Zeitmanagement oder eine besondere Dosierung der Periodat-Anionen angewiesen, außer dass die Menge an Periodat mit mindestens 5 mol je kg Ausgangsmaterial und vorzugsweise mindestens 6 mol je kg Ausgangsmaterial signifikant höher ist, als bei der bekannten Kombination von TEMPO mit Periodat. Selbst wenn aber nach der erfolgreichen Periodatoxidation der amorphen Cellulose oder des amorphen Chitins noch Periodat-Anionen vorliegen, bauen sie unter wässrigen Bedingungen bei den genannten pH-Werten kristalline Cellulose und kristallines Chitin nicht oder nur mit sehr geringer Geschwindigkeit ab, so dass die interessierenden Nanokristalle auch nach längerer Standzeit in der wässrigen Suspension problemlos geborgen werden können.

Bei dem erfindungsgemäßen Verfahren ist nach etwa einem Tag und spätestens nach etwa drei Tagen des Einwirkens der Periodat-Anionen bei den genannten pH-Werten eine signifikante Menge der in dem Ausgangsmaterial enthaltenen Nanokristalle durch Abbau von amorpher Cellulose oder amorphem Chitin freigesetzt. Eine zumindest im Wesentlichen vollständige Freisetzung der enthaltenen kristallinen Cellulose oder des enthaltenen kristallinen Chitins ist typischerweise nach etwa 10 bis 15 Tagen des Einwirkens der Periodat-Anionen erfolgt. Wie bereits ausgeführt wurde, können die Periodat-Anionen aber auch länger auf das Ausgangsmaterial einwirken, ohne dass dies die Ausbeute an CNC oder ChNC nach deren Freisetzung durch Abbau von CNC oder ChNC signifikant reduziert. Das Ausgangsmaterial kann daher auch deutlich länger als 15 Tage, beispielsweise bis zu 30 Tage, der oxidativen Auswirkung der Periodat-Anionen ausgesetzt werden. In jedem Fall dauert bei dem erfindungsgemäßen Verfahren die selektive Oxidation mit dem Periodat signifikant länger als die bekannte Oxidation mit TEMPO und Periodat in Kombination. Dies ist eine unmittelbare Folge der höheren Selektivität der Oxidation bei dem erfindungsgemäßen Verfahren für amorphe Cellulose und amorphes Chitin.

Mit dem erfindungsgemäßen Verfahren gelingt es bei geeigneten Lignocellulose-haltigen oder Chitin-haltigen Ausgangsmaterialen Ausbeuten an CNC von mehr als 50 Gewichtsprozent und an ChNC von sogar mehr als 60 Gewichtsprozent bezogen auf das Ausgangsmaterial zu erzielen.

Bei dem erfindungsgemäßen Verfahren ist es bevorzugt, wenn die Periodat-Anionen, deren oxidativer Wirkung das Ausgangsmaterial in der wässrigen Suspension unter alkalischen Bedingungen ausgesetzt wird, H₃IO₆²⁻-lonen und/oder H₂IO₆³⁻-lonen umfassen. Noch mehr bevorzugt ist es, wenn die Periodat-Anionen überwiegend, d. h. zu mehr als 50 % oder vorzugsweise zu mehr als 75 %, noch mehr bevorzugt zu mehr als 90 % und am meisten bevorzugt zu mehr als 95 % aus eben diesen Ionen bestehen.

Die Dosierung der Periodat-Anionen erfolgt vorzugsweise so, dass sie bei dem Lignocellulose-haltigen Ausgangsmaterial in einer Menge von bis zu 30 mol je kg des Ausgangsmaterials eingesetzt werden. Eine bevorzugte Konzentration liegt im Bereich von 6 mol bis 10 mol Periodat-Anionen je kg des Lignocellulose-haltigen Ausgangsmaterials. Oft erweisen sich 7 mol bis 8 mol Periodat-Anionen je kg des Lignocellulose-haltigen Ausgangsmaterials als günstig.

Bei dem Chitin-haltigen Ausgangsmaterial kann es hingegen sinnvoll sein, die Periodatanionen in einer Menge von bis zu 60 mol je kg des Ausgangsmaterials einzusetzen. Eine bevorzugte Menge liegt dabei zwischen 30 mol bis 50 mol je kg des Ausgangsmaterials, d. h. bei etwa 40 mol je kg des Chitin-haltigen Ausgangsmaterials oder etwas darunter.

Grundsätzlich hängt die optimale Konzentration der Periodat-Anionen von der Menge an abzubauender amorpher Cellulose oder amorphem Chitin in dem Ausgangsmaterial ab. Die genannten Werte haben sich jedoch über verschiedene Ausgangsmaterialien hinweg als günstig erwiesen. In diesem Zusammenhang bezieht sich die Masse des Ausgangsmaterials auf seine Trockenmasse, insbesondere die Trockenmasse seiner Lignocellulose-haltigen Fasern oder seiner Chitin-haltigen Bestandteile.

Bei dem erfindungsgemäßen Verfahren können die Periodat-Anionen durch Zugabe von Periodsäure, Orthoperiodsäure, Paraperiodsäure und/oder mindestens eines Periodats zu der wässrigen Suspension bereitgestellt werden. Bei dem Periodat kann es sich konkret um ein Alkali- oder Erdalkalisalz von Periodsäure, Orthoperiodsäure oder Paraperiodsäure handeln. Noch konkreter kann das Periodat Natriumperiodat, Natriumparaperiodat oder Kaliumperiodat sein.

Bei dem erfindungsgemäßen Verfahren stellt sich der pH-Wert größer als pH 7,0 normaler Weise nicht schon durch die Zugabe der Periodat-Anionen in einer der genannten Formen ein. Vielmehr muss der pH-Wert regelmäßig durch Zugabe mindestens einer Base zu der wässrigen Suspension in den gewünschten pH-Bereich gebracht werden. Dabei kann das Ausgangsmaterial mit dieser Base vorbehandelt werden, bevor es in der wässrigen Suspension der oxidativen Wirkung der Periodat-Anionen ausgesetzt wird. Eine solche alkalische Vorbehandlung eines Lignocellulose-haltigen Ausgangsmaterials vor seiner oxidativen Behandlung zur Isolierung enthaltener kristalliner Cellulose ist grundsätzlich aus dem Stand der Technik bekannt. Dort folgt ihr aber keine Periodatoxidation unter Beibehaltung alkalischen wässrigen Bedingungen der Vorbehandlung.

Die Base, mit der der pH-Wert der wässrigen Suspension während der Periodatoxidation auf über pH 7,0 angehoben wird, kann insbesondere aus Ammoniak, Alkaliaminsalzen und Alkalihydroxiden ausgewählt werden. Besonders bevorzugt handelt es sich bei der Base um Kaliumhydroxid. Ein Vorteil der Verwendung von Kaliumhydroxid als Base ist die hohe Löslichkeit von Kaliumperiodat unter den alkalischen Bedingungen in Wasser beispielsweise verglichen mit Natriumperiodat, so dass die Periodat-Anionen bei Verwendung von Kaliumhydroxid in größerer Zahl in dissoziierter Form vorliegen und damit für die gewünschte Periodatoxidation der amorphen Cellulose oder des amorphen Chitins zur Verfügung stehen.

Konkret kann das Kaliumhydroxid zu den Periodat-Anionen in einem Molverhältnis von 2,0 bis 2,8 oder mehr bevorzugt von 2,2 bis 2,8 zugegeben werden.

Der pH-Wert der wässrigen Suspension wird vorzugsweise deutlich höher als pH 7,0 und konkret auf größer pH 8,0, noch mehr bevorzugt auf größer pH 9,0 eingestellt. Höhere pH-Werte als 13,0 sind normalerweise nicht sinnvoll. Meistens reicht ein pH-Wert kleiner pH 12,0 und oft auch kleiner pH 11,0 aus. Als günstig hat sich ein pH-Wert von etwa pH 10 erwiesen.

Wie grundsätzlich aus dem Stand der Technik bekannt, ist es auch bei dem erfindungsgemäßen Verfahren sinnvoll, die Periodatoxidation im Dunklen durchzuführen, um die Periodat-Anionen vor Licht und damit vor einer photoinduzierten Zersetzung zu schützen.

Bei dem erfindungsgemäßen Verfahren wird die Periodatoxidation in einem typischen Temperaturbereich von 10 °C bis 30 °C d. h. bei Raumtemperatur oder nahe von Raumtemperatur durchgeführt.

Bei dem erfindungsgemäßen Verfahren wird die Periodatoxidation in der Regel in der vollständigen Abwesenheit von TEMPO und jedem anderen Nitroxid durchgeführt. In jedem Fall enthält die wässrige Suspension TEMPO in einer Menge von maximal 0,1 mol je kg des Ausgangsmaterials. In den allermeisten Fällen enthält die wässrige Suspension TEMPO in einer Menge von maximal 0,01 mol und in den meisten Fällen von maximal 0,001 mol je kg des Ausgangsmaterials.

Die durch die Periodatoxidation freigesetzten Nanokristalle können von dem Rest der wässrigen Suspension zum Beispiel dadurch abgetrennt werden, dass sie direkt von der Suspension oder einem Überstand der Suspension über Rückständen des Ausgangsmaterials abgefiltert und/oder abzentrifugiert werden. Es versteht sich, dass die auf diese Weise abgetrennten CNC oder ChNC anschließend gewaschen und auch chemisch nachbehandelt werden können. Letzteres ist aber für viele Verwendungen von CNC und ChNC nicht erforderlich. Vielmehr zeichnen sich die durch das erfindungsgemäße Verfahren hergestellten CNC und ChNC durch funktionelle Gruppen an ihrer Oberfläche aus, von denen etwa bis zu einem Drittel Carboxyl-Gruppen sind. Darüber hinaus weisen die erfindungsgemäß isolierten CNC und ChNC homogene Eigenschaften auf. Sie können daher so wie erfindungsgemäß isoliert, gegebenenfalls nach Trocknung, als Zuschlag zu Kunststoffen oder zur Stabilisierung von Öl-in-Wasser-Emulsionen eingesetzt werden. Die Rückstände des Ausgangsmaterials, die beim erfindungsgemäßen Isolieren der CNC und ChNC abgetrennt werden, können erneut dem erfindungsgemäßen Verfahren unterworfen werden, weil sie zu einem gewissen Anteil noch durch amorphe Cellulose oder amorphes Chitin zu Strukturen höherer Dichte miteinander verbundene CNC oder ChNC aufweisen können.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen. Weiterhin können die in den Patentansprüchen angeführten Merkmale durch weitere Merkmale ergänzt werden oder die einzigen Merkmale sein, die das jeweilige Verfahren aufweist.

### KURZBESCHREIBUNG DER FIGUREN

Im Folgenden wird die Erfindung unter Bezugnahme auf zwei Figuren anhand von bevorzugten Ausführungsbeispiele weiter erläutert und beschrieben.
- **Fig.** 1: zeigt ein Ablaufdiagramm des erfindungsgemäßen Verfahrens zum Isolieren von Cellulosenanokristallen (CNC) und Chitinnanokristallen (ChNC).
- **Fig. 2**: zeigt ein TEM Bild von nach dem erfindungsgemäßen Verfahren isolierten Chitinnanokristallen (ChNC).

### FIGURENBESCHREIBUNG UND AUSFÜHRUNGSBEISPIELE

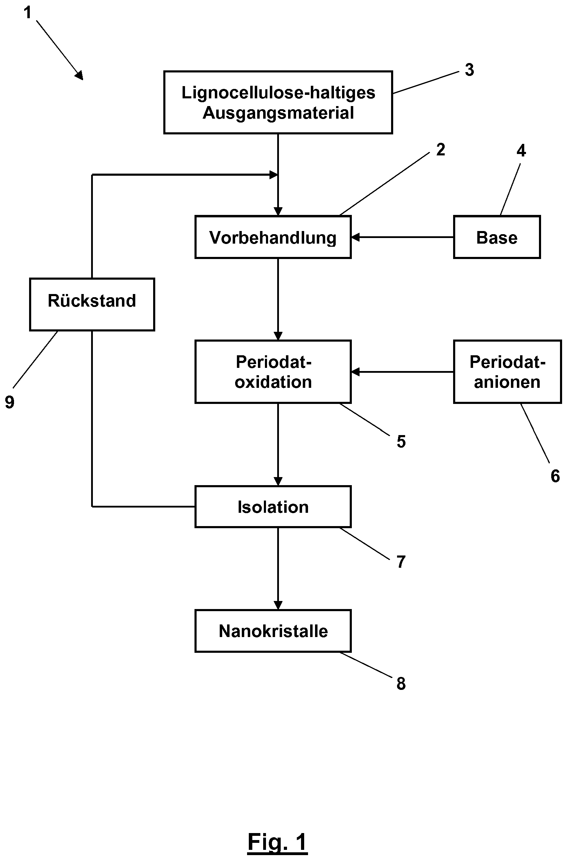

Das in **Fig. 1** anhand eines Ablaufdiagramms dargestellte Ausführungsbeispiel des erfindungsgemäßen Verfahrens 1 beginnt mit einer optionalen Vorbehandlung 2 des Lignocellulose-haltigen oder Chitin-haltigen Ausgangsmaterials 3 mit einer Base 4. Dazu wird das Ausgangsmaterial 3 in einer wässrigen Lösung der Base 4 aufgenommen. Für mikrokristallines Cellulosepulver (MCC) und Pulp ist die Vorbehandlung 2 häufig nicht notwendig; bei Naturfasern und Sägemehl als Lignocellulose-haltiges Ausgangsmaterial 3 ist dieser Schritt für die Erhöhung der Ausbeute an Cellulosenanokristallen (CNC) ebenso wie bei Schalen von Krusten- und Schalentieren für die Erhöhung der Ausbeute an Chitinnanokristallen (ChNC) jedoch sehr hilfreich. Für eine an die Vorbehandlung 2 anschließende Periodatoxidation 5 werden Periodat-Anionen 6 zugesetzt und gegebenenfalls weitere Base 4, um einen pH-Wert der wässrigen Suspension für die Periodatoxidation 5 von etwa pH 10 einzustellen. Die Periodatoxidation 5 wird für etwa zwei Wochen durchgeführt, und zwar im Dunklen, um die Periodat-Anionen vor photochemischer Zersetzung zu schützen. Anschließend erfolgt eine Isolation 7 der interessierenden CNC oder ChNC 8 beispielsweise durch Zentrifugieren eines Überstands der wässrigen Suspension, während ein Sediment oder Rückstand 9 der Suspension erneut der Vorbehandlung 2 oder alternativ auch direkt erneut der Periodatoxidation 5 zugeführt wird.

Die für die nachfolgenden Beispiele verwendeten Materialien wurden aus folgenden Quellen bezogen: Periodsäure, Natriummetaperiodat, Kaliumperiodat, Natriumhydroxid, Kaliumhydroxid, Natriumparaperiodat, Lithiumhydroxid und Ammoniak wurden von Sigma-Aldrich (Darmstadt, Deutschland) bezogen. Avicel PH-101 mikrokristallines Cellulosepulver (MCC) mit einer mittleren Teilchengröße von 50 µm wurde von Fluka Sigma-Aldrich (Darmstadt, Deutschland) bezogen. Baumwolle wurde im Supermarkt gekauft. Pulp wurde als Geschenk von Lenzing (Lenzing, Österreich) erhalten. Sägespäne sowohl von Weichholz als auch von Hartholz wurden aus der Werkstatt der Erfinder entnommen. Stroh wurde im Supermarkt gekauft. Zeitungspapier stammte von der Universität der Erfinder. Als Chitin-haltiges Ausgangsmaterial wurden gereinigte und zerkleinerte Schalen von Schalen- und Krustentieren verwendet.

### Isolieren von CNC

In einem Ausführungsbeispiel des erfindungsgemäßen Verfahrens zum Isolieren von CNC ohne Vorbehandlung 2 gemäß Fig. 1 wurden 1,76 g H₅IO₆ in 50 ml entionisiertem Wasser aufgelöst. Der pH-Wert dieser Lösung wurde mit wässriger Kaliumhydroxidlösung auf über 8,5 eingestellt. Ein Gramm Lignocellulose-haltiges Ausgangsmaterial wurde zugegeben. Ein Reaktionskolben mit der Reaktionsmischung wurde im Dunklen gehalten, indem der Kolben mit mehreren Schichten Aluminiumfolie umwickelt wurde. Die Periodatoxidation 5 wurde bei Raumtemperatur unter kontinuierlichem Rühren mit einer Geschwindigkeit von 700 Umdrehungen pro Minute für zwei Wochen durchgeführt. Direkt nach der Periodatoxidation 5 wurde die Reaktionsmischung bei 12.000 Umdrehungen pro Minute für zehn Minuten auf einer Ultrazentrifuge (Thermo Scientific Multifuge X3 FR, 15-6·100y) abzentrifugiert. Das Zentrifugat wurde mit entionisiertem Wasser dreimal gewaschen und erneut durch Zentrifugation gesammelt. Nach dem Waschen wurde das Zentrifugat für zwanzig Minuten mit Ultraschall behandelt (Elmasonic P, 37 kHz, 100 W) und das Produkt wurde durch Dialyse in Wasser unter Verwendung einer Dialysemembran mit einem Molekulargewichtsabschneidewert von 10.000 Da (Thermo Fisher Scientific) gereinigt. Letztlich wurde die wässrige Lösung von 3 bis 8 mg Feststoffe/ml für fünf Minuten mit Ultraschall behandelt und bei 4 °C über Nacht gehalten. Danach enthielt die obere stabile Phase der Suspension die Cellulosenanokristalle die anschließend geborgen und für die Ausbeuteberechnung verwendet wurden.

Variationen in Bezug auf die eingesetzte Base und den damit eingestellten pH-Wert sind in der nachfolgenden Tabelle 1 dokumentiert.

**Tabelle 1. Optimierung in Bezug die eingesetzte Base und den damit eingestellten pH-Wert**

| **Ausgangs-material^{a}** | **Oxidations-reagenz** | **Base** | **pH-Wert** | **Reaktionszeit (d)** | **Ausbeute an CNC (%)** |
|---|---|---|---|---|---|
| MCC | H₅IO₆ (1,76 g) | --- | 0,9 | 36 h | 0 |
| MCC | H₅IO₆ (1,76 g) | NH₄OH | 6,5 | 14 | 5 |
| MCC | H₅IO₆ (1,76 g) | NH₄OH | 7,5 | 14 | 22 |
| MCC | H₅IO₆, (1,76 g) | ^{b}KOH (~1,02 g) | 10 | 14 | 50 |
| MCC | H₅IO₆ (1,76 g) | KOH | 12 | 14 | |
| MCC | H₅IO₆ (3,52 g) | KOH | 10 | 14 | |
| MCC | H₅IO₆ (5,28 g) | KOH | 10 | 14 | |
| MCC | H₅IO₆(7,04 g) | KOH | 10 | 14 | 39 |
| MCC | H₅IO₆, (1,76 g) | KOH | 10 | 30 | 48 |

| | | | | | |
|---|---|---|---|---|---|
| a: Die Menge an MCC betrug 1 g, und das Ausgangsmaterial wurde nicht vorbehandelt b: Das Molverhältnis von KOH zu H₅IO₆ betrug 2,355 | | | | | |

Das Ausgangsmaterial war jeweils MCC, d. h. das mikrokristalline Cellulosepulver Avicel PH-101, in einer Menge von 1 g. Die Ausbeute an CNC ist auf diese Menge, d. h. die Trockenmasse des Ausgangsmaterials bezogen. Eine hohe Ausbeute an CNC wurde bei einem pH-Wert von 10 unter Verwendung von KOH als Base erzielt. Das in der ersten Zeile von Tabelle 1 angegebene Vergleichsbeispiel ohne Zugabe einer Base belegt, dass sich durch die zugegebene Menge an H₅IO₆ mit pH 0,9 ein stark saurer pH-Wert einstellte. Sehr hohe pH-Werte wie in dem Beispiel von Zeile 5 wirken sich gemäß (in der Tabelle 1 nicht angegebenen) vorläufigen Ergebnissen negativ auf die Ausbeute aus, wohl wegen einer stärkeren unkontrollierten Hydrolyse der Celluloseketten durch Alkali.

Die in Tabelle 2 berichteten Beispiele decken eine Reaktionszeit von einem bis zu 14 Tagen ab, wobei die Ausbeute anfänglich sehr stark und insgesamt bis auf 50 % anstieg.

**Tabelle 2. Unterschiedliche Reaktionszeiten bei Verwendung von KOH als Base**

| **Ausgangs-material (1 g** | **Chemikalien** | | **pH-Wert** | **Reaktionszeit (d)** | **Ausbeute (%)** |
|---|---|---|---|---|---|
| | **Quelle der Periodatanionen (1,76 g)** | **Base (∼1,02 g)** | **anfangs** | | |
| MCC | H₅IO₆ | KOH | 10 | 1 | 10 |
| MCC | H₅IO₆ | KOH | 10 | 3 | 28 |
| MCC | H₅IO₆ | KOH | 10 | 6 | 32 |
| MCC | H₅IO₆ | KOH | 10 | 10 | 37 |
| MCC | H₅IO₆ | KOH | 10 | 14 | 50 |

| | | | | | |
|---|---|---|---|---|---|
| Das Molverhältnis von KOH zu H₅IO₆ betrug 2,355 | | | | | |

In der Tabelle 3 sind Beispiele angeführt, die zum Teil auch eine Vorbehandlung 2 gemäß Fig. 1 mit KOH als Base umfassen. Tabelle 3 deckt zudem verschiedene Lignocellulose-haltige Ausgangsmaterialien ab, ebenso wie verschiedene Quellen der Periodatanionen und verschiedene Basen zur Einstellung des alkalischen pH-Werts. Bei Verwendung von Na₃H₂IO₆ als Quelle der Periodatanionen muss keine zusätzliche Base eingesetzt werden, um den gewünschten alkalischen pH-Wert einzustellen. Die zum Teil nur geringen prozentualen Ausbeuten an CNC bezogen auf die Trockenmasse des Ausgangsmaterials sind bei verschiedenen Ausgangsmaterialien auf dessen Zusammensetzung zurückzuführen. Die Oxidationsreaktivität von H₅IO₆ sowie anderen Periodatanionen-Spezies hängt stark von deren Konzentrationen ab. Eine sehr hohe Konzentration dieser Periodatanionen führt zu einer stärkeren sowie schnelleren Oxidation auch der kristallinen Cellulose, siehe das Beispiel gemäß Zeile 9 von Tabelle 3. Im Vergleich dazu ist die Menge dieser Periodatanionen in dem Beispiel in Zeile 10 von Tabelle 3 günstiger, d. h. an den CNC erfolgt nur eine sehr langsame Oxidation, wodurch eine höhere Ausbeute an den CNC erzielt wird.

**Tabelle 3. Übersicht über verschiedene Ausgangsmaterialien und Reaktionsbedingungen**

| **Ausgangs-material (1 g)** | **Vorbe-handlung** | **Chemikalien** | | **pH-Wert** | **Reaktionszeit (d)** | **Ausbeute (%)** |
|---|---|---|---|---|---|---|
| | | **Quelle der Periodatanionen** | **Base** | | | |
| MCC | --- | H₅IO₆, (1,76 g) | KOH | 10 | 14 | 50 |
| MCC | --- | H₅IO₆, (1,76 g) | KOH | 10 | 30 | 54 |
| MCC | --- | NaIO₄ (1,65 g) | NaOH | 10 | 14 | 42 |
| MCC | --- | NaIO₄ (1,65 g) | NaOH | 7,5 | 14 | 39 |
| MCC | --- | NaIO₄ (1,65 g) | Alanine | 10 | 14 | 30 |
| MCC | --- | H₅IO₆ (1,76 g) | LiOH | 7,5 | 14 | 34 |
| MCC | --- | H₅IO₆, (1,76 g) | LiOH | 10 | 14 | 37 |
| MCC | --- | Na₃H₂IO₆(2,27g) | --- | 12,18 | 14 | 42 |
| MCC | KOH | H₅IO₆ (7,0 g) | KOH | 10 | 14 | 31 |
| MCC | KOH | H₅IO₆ (1,76 g) | KOH | 10 | 14 | 48.4 |
| Cotton | KOH | H₅IO₆, (1,76 g) | KOH | 10 | 14 | 11 |
| Pulp-Laubholz | KOH | H₅IO₆ (1,76 g) | KOH | 10 | 14 | 42 |
| Pulp-Nadelholz | KOH | H₅IO₆, (1,76 g) | KOH | 10 | 14 | 36 |
| Stroh | KOH | H₅IO₆, (1,76 g) | KOH | 10 | 14 | 2 |
| Sägespäne-Kiefer | KOH | H₅IO₆ (7,0 g) | KOH | 10 | 14 | 17 |
| Sägespäne-Buche | KOH | H₅IO₆ (7,0 g) | KOH | 10 | 14 | 7 |
| Zeitungspapier | KOH | H₅IO₆, (1,76 g) | KOH | 10 | 14 | |
| Hanf | KOH | H₅IO₆, (1,76 g) | KOH | 10 | 14 | 20 |

### Isolieren von ChNC

In einem Ausführungsbeispiel des erfindungsgemäßen Verfahrens zum Isolieren von ChNC ohne Vorbehandlung 2 gemäß Fig. 1 wurden 7,0 g H₅IO₆ zusammen mit entionisiertem Wasser in einen Reaktionskolben gegeben. Der pH-Wert dieser Lösung wurde wie gewünscht zwischen pH 6 und pH 8,5 mit Ammoniak und zwischen pH 8,5 und pH 14 mit wässriger Kaliumhydroxidlösung eingestellt. Ein Gramm Chitin wurde zugegeben, und das Reaktionsvolumen wurde auf 150 ml aufgefüllt. Die Periodatoxidation 5 wurde im Dunklen bei Raumtemperatur unter kontinuierlichem Rühren für zwei Wochen durchgeführt. Am Ende der Periodatoxidation 5 wurde die Reaktionsmischung bei 14.000 Umdrehungen pro Minute für zwanzig Minuten auf einer Ultrazentrifuge (Thermo Scientific Multifuge X3 FR, 15-6·100y) abzentrifugiert. Die abzentrifugierten Feststoffe wurden in entionisiertem Wasser resuspendiert, und 5 ml Ethylenglykol wurden zugegeben, bevor die Suspension für 1 Stunde in eiskaltem Wasser mit Ultraschall behandelt wurde (Elmasonic P 30 H, 37 kHz, 180 W). Danach wurde das feste Produkt durch Dialyse in Wasser unter Verwendung einer Dialysemembran mit einem Molekulargewichtsabschneidewert von 10.000 Da (Thermo Fisher Scientific) gereinigt, und das Volumen der erhaltenen Suspension wurde auf 100 ml fixiert. Die stabilen Chitinnanokristalle im Überstand nach 20 Minuten Zentrifugieren bei 3.000 Umdrehungen pro Minute und 25 °C wurden zur Berechnung der Ausbeute und weiteren Charakterisierung verwendet. Um das Isolieren zu beschleunigen und die Ausbeute an Chitinnanokristallen zu erhöhen, kann das Chitin-haltige Ausgangsmaterial in 3 Gewichts-% KOH-Lösung für 24 Stunden eingeweicht werden.

Die getrockneten ChNC wurden durch Transmissionselektronenmikroskopie (TEM) charakterisiert, wobei die Proben von ihrer Suspension in Wasser mit 0,01 Gewichtsprozent präpariert wurden. Die TEM-Beobachtungen wurden auf einem CM12-Transmissionselektronenmikroskop von Phillips, Niederlande, durchgeführt. Die Proben wurden mit Wolframphosphorsäurelösung (2 Gewichtsprozent in Wasser) angefärbt und der pH-Wert wurde unter Verwendung von wässrigem NaOH von 1 mol/l auf pH 7,0 eingestellt.

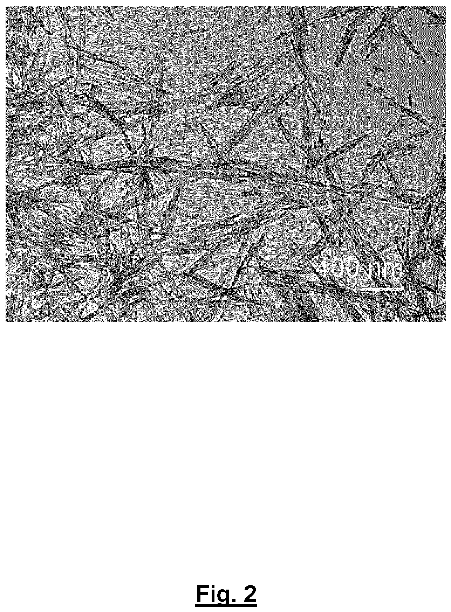

**Fig. 2** zeigt ein erhaltenes TEM-Bild der erfindungsgemäß isolierten Chitinnanokristalle. Die Durchmesser der in diesem Bild gezeigten Chitinnanokristalle betragen zwischen 10 und 30 nm und ihre mittlere Länge liegt im Bereich von 250 bis 400 nm.

Die Carboxylgruppen der isolierten Chitinnanokristalle wurde durch Titration bestimmt. Vor der Titration wurde der pH-Wert der ChNC-Suspension unter Verwendung von wässriger HCI-Lösung von 1 mol/l auf pH 2 eingestellt. Dann wurde die Suspension auf einem 665 Dosimat (Metrohm) mit einer Dosierungsrate von 0,01 mm/s bis auf pH 11 titriert, wobei die Leitfähigkeit unter Verwendung des 865 Conductivity Moduls (Metrohm) in Intervallen von 2 Sekunden aufgezeichnet wurde. Dabei wurde auch die pH-Änderung erfasst. Aus den Verläufen der Leitfähigkeits- und pH-Kurven wurden die NaOH-Konzentrationen bestimmt, die die Carboxylgruppen und die Aminogruppen neutralisierten. Daraus wurde die Menge der Carboxylgruppen an der Oberfläche der Chitinnanokristalle zu 0,114 ± 0,05 mol/kg und die Konzentration der Aminogruppen zu 0,098 ± 0,05 mol/kg ChNC bestimmt.

Durch Ändern des pH-Werts bei der Periodatoxidation wurde der Einfluss des pH-Werts auf die Ausbeute an Chitinnanokristallen ermittelt. Tabelle 4 zeigt, dass nach der Periodatreaktion für 14 Tage die höchste Ausbeute an Chitinnanokristallen bei pH 10 erzielt wurde. Ab pH 6 gelingt es, ChNC in relevanter Ausbeute zu isolieren.

**Tabelle 4. Ausbeuten an Chitinnanokristallen nach Reaktion bei verschiedenen pH-Werten**

| pH-Wert | Ausbeute an Chitinnanokristallen (Gewichtsprozent) |
|---|---|
| 4 | 0 |
| 5 | 0 |
| 6 | 4 |
| 7 | 7 |
| 8 | 7 |
| 9 | 30 |
| 10 | 46 |
| 12 | 17 |
| 13 | 12 |
| 14 | 8 |

Tabelle 5 zeigt den Effekt der eingesetzten Menge an Periodat bezogen auf das Chitin-haltige Ausgangsmaterial. Verwendet wurden 1,76 g, 3,52 g und 7,04 g Periodsäure, um 1 g Chitin bei pH 10 zu oxidieren. Nach 14 Tagen Reaktion betrug die höchste Ausbeute an Chitinnanokristallen 46 Gewichtsprozent bei Verwendung von 7,04 g Periodsäure. Im Vergleich dazu wurden nach 14 Tagen Reaktion kaum isolierte Chitinnanokristalle erhalten, wenn nur 1,76 g Periodsäure eingesetzt wurden.

**Tabelle 5. Einfluss der eingesetzten Menge an Periodat bezogen auf das Chitin**

| Massenverhältnis Periodatsäure: Chitin | Ausbeute an Chitinnanokristallen (Gewichtsprozent) |
|---|---|
| 1,76 | ~0 |
| 3,52 | 7 |
| 7,04 | 46 |

Tabelle 6 zeigt die Ausbeuten an isolierten Chitinnanokristallen nach Reaktionszeiten bis zu 30 Tagen. Bei Verwendung von 7,04 g Periodsäure um, 1 g Chitin bei pH 10 zu oxidieren, wurde die Ausbeute an isolierten Chitinnanokristallen für unterschiedliche Reaktionsdauern bestimmt. Die Menge an isolierten Chitinnanokristallen, die bei dem erfindungsgemäßen Verfahren erhalten werden, steigt nach 24 Stunden Reaktionsdauer stetig an. Nach drei Tagen ist eine signifikante Ausbeute vorhanden. Nach 14 Tagen Reaktion lag die Ausbeute bei 46 Gewichtsprozent. Nach 30 Tagen Reaktion erreichte sie 60 Gewichtsprozent.

**Tabelle 6. Ausbeute an Chitinnanokristallen nach Reaktion von bis zu 30 Tagen**

| Tage | Ausbeute an Chitinnanokristallen (Gewichtsprozent) |
|---|---|
| 1 | 0 |
| 3 | 7 |
| 6 | 13 |
| 10 | 25 |
| 14 | 46 |
| 30 | 60 |

### BEZUGSZEICHENLISTE

- 1: Verfahren
- 2: Vorbehandlung
- 3: Ausgangsmaterial
- 4: Base
- 5: Oxidation
- 6: Periodatanionen
- 7: Isolation
- 8: Nanokristalle (CNC oder ChNC)
- 9: Rückstand

## Patentansprüche

1. Verfahren zum Isolieren von Cellulose- oder Chitinnanokristallen (8) aus einem Lignocellulose- oder Chitin-
haltigen Ausgangsmaterial (3), wobei das Ausgangsmaterial (3) in einer wässrigen Suspension einer oxidativen Wirkung von Periodatanionen (6) ausgesetzt wird, wobei der pH-Wert der wässrigen Suspension auf größer als pH 7,0 eingestellt wird, **dadurch gekennzeichnet, dass** die Periodatanionen (6) in einer Menge von mindestens 5 mol je kg des Ausgangsmaterials (3) bereitgestellt werden und dass das Ausgangsmaterial (3) in der wässrigen Suspension der oxidativen Wirkung der Periodatanionen (6) für einen Zeitraum von mindestens einem Tag ausgesetzt wird.

2. Verfahren nach Anspruch 1, **dadurch gekennzeichnet, dass** das Ausgangsmaterial (3) in der wässrigen Suspension der oxidativen Wirkung der Periodatanionen für einen Zeitraum von 3 bis 30 Tagen oder von 10 bis 15 Tagen ausgesetzt wird.

3. Verfahren nach Anspruch 1 oder 2, **dadurch gekennzeichnet, dass** die Periodatanionen (6) H₃IO₆²⁻-Ionen und/oder H₂IO₆³⁻-Ionen umfassen, wobei die Periodatanionen (6) optional überwiegend aus H₃IO₆²⁻-Ionen und/oder H₂IO₆³⁻-Ionen bestehen.

4. Verfahren nach einem der vorhergehenden Ansprüche, **dadurch gekennzeichnet, dass** die Periodatanionen (6) bei dem Lignocellulose-haltigen Ausgangsmaterial (3) in einer Menge von bis zu 30 mol je kg des Ausgangsmaterials (3) oder von 6 mol bis zu 10 mol je kg des Ausgangsmaterials (3) bereitgestellt werden, während die Periodatanionen (6) bei dem Chitin-haltigen Ausgangsmaterial (3) in einer Menge von bis zu 60 mol je kg des Ausgangsmaterials (3) oder von 30 mol bis 50 mol je kg des Ausgangsmaterials (3) bereitgestellt werden.

5. Verfahren nach einem der vorhergehenden Ansprüche, **dadurch gekennzeichnet, dass** die Periodatanionen (6) durch Zugabe von Periodsäure, Orthoperiodsäure, Paraperiodsäure und/oder mindestens eines Periodats zu der wässrigen Suspension bereitgestellt werden.

6. Verfahren nach Anspruch 5, **dadurch gekennzeichnet, dass** die Periodatanionen (6) durch Zugabe mindestens eines Alkali- oder Erdalkalisalzes von Periodsäure, Orthoperiodsäure oder Paraperiodsäure zu der wässrigen Suspension bereitgestellt werden, wobei die Periodatanionen (6) optional durch Zugabe von Natriumperiodat, Natriumparaperiodat oder Kaliumperiodat zu der wässrigen Suspension bereitgestellt werden.

7. Verfahren nach einem der vorhergehenden Ansprüche, **dadurch gekennzeichnet, dass** der pH-Wert eingestellt wird, indem mindestens eine Base (4) zu der Suspension zugegeben wird.

8. Verfahren nach Anspruch 7, **dadurch gekennzeichnet, dass** das Ausgangsmaterial (3), bevor es in der wässrigen Suspension der oxidativen Wirkung der Periodatanionen (6) ausgesetzt wird, in der wässrigen Suspension mit der mindestens einen Base (4) vorbehandelt wird.

9. Verfahren nach Anspruch 7 oder 8, **dadurch gekennzeichnet, dass** die mindestens eine Base (4) ausgewählt wird aus Ammoniak, Alkaliaminsalzen und Alkalihydroxiden.

10. Verfahren nach Anspruch 9, **dadurch gekennzeichnet, dass** die mindestens eine Base (4) Kaliumhydroxid ist, wobei das Kaliumhydroxid optional in einem Molverhältnis von 2,0 bis 2,8 oder von 2,2 bis 2,5 zu den Periodatanionen (6) zugegeben wird.

11. Verfahren nach einem der vorhergehenden Ansprüche, **dadurch gekennzeichnet, dass** der pH-Wert der wässrigen Suspension auf größer pH 8,0 oder größer pH 9,0 und/oder kleiner pH 13,0, kleiner pH 12,0 oder kleiner pH 11,0 eingestellt wird.

12. Verfahren nach einem der vorhergehenden Ansprüche, **dadurch gekennzeichnet, dass** die Periodatanionen (6) vor Licht geschützt werden.

13. Verfahren nach einem der vorhergehenden Ansprüche, **dadurch gekennzeichnet, dass** das Ausgangsmaterial (3) in der wässrigen Suspension der oxidativen Wirkung der Periodatanionen (6) bei einem Temperatur im Bereich von 10 °C bis 30 °C ausgesetzt wird.

14. Verfahren nach einem der vorhergehenden Ansprüche, **dadurch gekennzeichnet, dass** die wässrige Suspension TEMPO in einer Menge von maximal 0,1 mol oder maximal 0,01 mol oder maximal 0,001 mol je kg des Ausgangsmaterials oder kein TEMPO enthält.

15. Verfahren nach einem der vorhergehenden Ansprüche, **dadurch gekennzeichnet, dass** die Nanokristalle (8) abgetrennt werden, nachdem das Ausgangsmaterial (3) in der wässrigen Suspension der oxidativen Wirkung der Periodatanionen (6) ausgesetzt worden ist, indem sie von der Suspension oder einem Überstand der Suspension über Rückständen (9) des Ausgangsmaterials (3) abgefiltert und/oder abzentrifugiert werden.

## Claims

1. Method of isolating cellulose or chitin nanocrystals (8) from a lignocellulose- or chitin-containing starting material (3), wherein the starting material (3) is exposed to an oxidative effect of periodate anions (6) in an aqueous suspension, wherein the pH-value of the aqueous suspension is adjusted to higher than pH 7.0, **characterized in that** the periodate anions (6) are provided in an amount of at least 5 mol per kg of the starting material (3) and that the starting material (3) is exposed to the oxidative effect of the periodate anions (6) for a period of at least one day in the aqueous suspension.

2. Method of claim 1, **characterized in that** the starting material (3) is exposed to the oxidative effect of the periodate anions for a period of 3 to 30 days or of 10 to 15 days in the aqueous suspension.

3. Method of claim 1 or 2, **characterized in that** the periodate anions (6) include H₃IO₆²⁻-ions and/or H₂IO₆³⁻-ions, wherein, optionally, the periodate anions (6) predominantly consist of H₃IO₆²⁻-ions and/or H₂IO₆³⁻-ions.

4. Method of any of the preceding claims, **characterized in that**, in case of the lignocellulose-containing starting material (3), the periodate anions (6) are provided in an amount of up to 30 mol per kg of the starting material (3) or from 6 mol to 10 mol per kg of the starting material (3), whereas, in case of the chitin-containing starting material (3), the periodate anions (6) are provided in an amount of up to 60 mol per kg of the starting material (3) or from 30 mol to 50 mol per kg of the starting material (3).

5. Method of any of the preceding claims, **characterized in that** the periodate anions (6) are provided by adding periodic acid, orthoperiodic acid, paraperiodic acid and/or at least one periodate to the aqueous suspension.

6. Method of claim 5, **characterized in that** the periodate anions (6) are provided by adding at least one alkaline or alkaline earth salt of periodic acid, orthoperiodic acid or paraperiodic acid to the aqueous suspension, wherein, optionally, the periodate anions (6) are provided by adding sodium periodate, sodium paraperiodate or potassium periodate to the aqueous suspension.

7. Method of any of the preceding claims, **characterized in that** the pH-value is adjusted **in that** at least one base (4) is added to the suspension.

8. Method of claim 7, **characterized in that** the starting material (3), prior to being exposed to the oxidative effect of the periodate anions (6) in the aqueous suspension, is pretreated with the at least one base (4) in the aqueous suspension.

9. Method of claim 7 or 8, **characterized in that** the at least one base (4) is selected from ammonia, alkaline amine salts and alkaline hydroxides.

10. Method of claim 9, **characterized in that** the at least one base (4) is potassium hydroxide, wherein, optionally, the potassium hydroxide is added to the periodate anions (6) at a mol ratio of 2.0 to 2.8 or of 2.2 to 2.5.

11. Method of any of the preceding claims, **characterized in that** the pH-value of the aqueous suspension is adjusted to higher than pH 8.0 or higher than pH 9.0 and/or lower than pH 13.0, lower than pH 12.0 or lower than pH 11.0.

12. Method of any of the preceding claims, **characterized in that** the periodate anions (6) are protected against light.

13. Method of any of the preceding claims, **characterized in that** the starting material (3) is exposed to the oxidative effect of the periodate anions (6) at a temperature in a range from 10 °C to 30 °C in the aqueous suspension.

14. Method of any of the preceding claims, **characterized in that** the aqueous suspension includes TEMPO in an amount of at maximum 0.1 mol or at maximum 0.01 mol or at maximum 0.001 mol per kg of the starting material or no TEMPO.

15. Method of any of the preceding claims, **characterized in that** the nanocrystals (8) are separated after the starting material (3) has been exposed to the oxidative effect of the periodate anions (6) in the aqueous suspension, **in that** they are filtered-off and/or centrifuged-off from the suspension or a supernatant of the suspension over residues (9) of the starting material (3).

## Revendications

1. Procédé d'isolation de nano-cristaux de cellulose ou de chitine (8) à partir d'un matériau initial contenant de la lignocellulose ou de la chitine (3), dans lequel le matériau initial (3) est exposé, dans une suspension aqueuse, à une action oxydative d'anions périodates (6), dans lequel la valeur de pH de la suspension aqueuse est ajustée à plus de 7,0, **caractérisé en ce que** les anions périodates (6) sont mis à disposition dans une quantité d'au moins 5 mol par kg de matériau initial (3) et **en ce que** le matériau initial (3) est exposé, dans la suspension aqueuse, à l'action oxydative des anions périodates (6) pendant au moins une journée.

2. Procédé selon la revendication 1, **caractérisé en ce que** le matériau initial (3) est exposé, dans la suspension aqueuse, à l'action oxydative des anions périodates pendant 3 à 30 jours ou de 10 à 15 jours.

3. Procédé selon la revendication 1 ou 2, **caractérisé en ce que** les anions périodates (6) comprennent des ions H₃IO₆²⁻ et/ou H₂IO₆,³⁻, dans lequel les anions périodates (6) sont, en option, constitués majoritairement d'ions H₃IO₆²⁻ et/ou H₂IO₆³⁻.

4. Procédé selon l'une des revendications précédentes, **caractérisé en ce que** les anions périodates (6) sont mis à disposition, dans le matériau initial contenant de la lignocellulose (3), dans une quantité jusqu'à 30 mol par kg de matériau initial (3) ou de 6 à 10 mol par kg de matériau initial (3), tandis que les anions périodates (6) sont mis à disposition, dans le matériau initial contenant de la chitine (3), dans une quantité jusqu'à 60 mol par kg de matériau initial (3) ou de 30 à 50 mol par kg de matériau initial (3).

5. Procédé selon l'une des revendications précédentes, **caractérisé en ce que** les anions périodates (6) sont mis à disposition par l'ajout d'acide périodique, d'acide orthopériodique, d'acide parapériodique et/ou d'au moins un périodate à la suspension aqueuse.

6. Procédé selon la revendication 5, **caractérisé en ce que** les anions périodates (6) sont mis à disposition par l'ajout d'au moins un sel alcalin ou alcalino-terreux d'acide périodique, d'acide orthopériodique ou d'acide parapériodique à la suspension aqueuse, dans lequel anions périodates (6) sont, en option, mis à disposition par l'ajout de périodate de sodium, de parapériodate de sodium ou de périodate de potassium à la suspension aqueuse.

7. Procédé selon l'une des revendications précédentes, **caractérisé en ce que** la valeur de pH est ajustée en ajoutant au moins une base (4) à la suspension.

8. Procédé selon la revendication 7, **caractérisé en ce que** le matériau initial (3), avant d'être exposé, dans la suspension aqueuse, à l'action oxydative des anions périodates (6), est pré-traité dans la suspension aqueuse avec l'au moins une base (4).

9. Procédé selon la revendication 7 ou 8, **caractérisé en ce que** l'au moins une base (4) est sélectionnée parmi l'ammoniac, des sels d'amines alcalins et des hydroxydes alcalins.

10. Procédé selon la revendication 9, **caractérisé en ce que** l'au moinsune base (4) est de l'hydroxyde de potassium, dans lequel l'hydroxyde de potassium est ajouté, en option, dans un rapport molaire de 2,0 à 2,8 ou de 2,2 à 2,5, aux anions périodates (6).

11. Procédé selon l'une des revendications précédentes, **caractérisé en ce que** la valeur de pH de la suspension aqueuse est ajustée à plus de pH 8,0 ou plus de pH 9,0 et/ou à moins de pH 13,0, moins de pH 12,0 ou moins de pH 11,0.

12. Procédé selon l'une des revendications précédentes, **caractérisé en ce que** les anions périodates (6) sont protégés de la lumière.

13. Procédé selon l'une des revendications précédentes, **caractérisé en ce que** le matériau initial (3) est exposé, dans la suspension aqueuse, à l'action oxydative des anions périodates (6) à une température de l'ordre de 10 °C à 30 °C.

14. Procédé selon l'une des revendications précédentes, **caractérisé en ce que** la suspension aqueuse contient du TEMPO dans une quantité de maximum 0,1 mol ou de maximum 0,01 mol ou de maximum 0,001 mol par kg de matériau initial ou ne contient pas de TEMPO.

15. Procédé selon l'une des revendications précédentes, **caractérisé en ce que** les nano-cristaux (8) sont séparés une fois que le matériau initial (3) ait été exposé, dans la solution aqueuse, à l'action oxydative des anions périodates (6), grâce au fait qu'ils sont filtrés et/ou centrifugés hors de la suspension ou d'un liquide surnageant sur la suspension au-dessus des résidus (9) du matériau initial (3).
